(19) **Europäisches Patentamt**
**European Patent Office**
**Office européen des brevets**

(11) **EP 2 345 978 B1**

(12) **EUROPEAN PATENT SPECIFICATION**

(45) Date of publication and mention
of the grant of the patent:
**21.11.2018 Bulletin 2018/47**

(51) Int Cl.:
***G06K 9/00*** *(2006.01)*

(21) Application number: **10150794.5**

(22) Date of filing: **14.01.2010**

(54) **Detection of flash illuminated scenes in video clips and related ranking of video clips**

Erkennung von blitzlichtbeleuchteten Szenen in Videoclips und dazugehörige Rangordnung von Videoclips

Détection des scènes éclairées par flash dans les clips vidéo et classement associé des clips vidéo

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**20.07.2011 Bulletin 2011/29**

(73) Proprietor: **Deutsche Telekom AG**
**53113 Bonn (DE)**

(72) Inventors:
• **Sundaram, Shiva**
**10119 Berlin (DE)**
• **Velisavljevic, Vladan**
**10625 Berlin (DE)**

(74) Representative: **Vossius & Partner**
**Patentanwälte Rechtsanwälte mbB**
**Siebertstrasse 3**
**81675 München (DE)**

(56) References cited:
**EP-A2- 0 659 016     US-A1- 2009 208 106**

• **FANJUN QI ET AL: "Supervised classification for video shot segmentation" PROC. OF THE 2003 INTERNATIONAL CONFERENCE ON MULTIMEDIA AND EXPO: 6 - 9 JULY 2003, BALTIMORE MARRIOTT WATERFRONT HOTEL, BALTIMORE, MARYLAND, USA, IEEE OPERATIONS CENTER, US, vol. 2, 6 July 2003 (2003-07-06), pages 689-692, XP010650565 ISBN: 978-0-7803-7965-7**
• **COTSACES C ET AL: "Video shot detection and condensed representation. A review" IEEE SIGNAL PROCESSING MAGAZINE, IEEE SERVICE CENTER, PISCATAWAY, NJ, US LNKD-DOI:10.1109/MSP.2006.1621446, vol. 23, no. 2, 1 March 2006 (2006-03-01), pages 28-37, XP002524623 ISSN: 1053-5888**

## Description

### Technical Field

The present invention relates to a method of processing video data and more particularly to a computer program and a system adapted for performing said method.

Such methods in which video data is extracted to a plurality of frames and the single frames are analysed for detecting a flash illumination can be used for processing video data and in particular for the detection of flash illuminated scenes in video clips as well as related ranking of video clips. Detection of such abrupt events, such as caused by camera flashes in the scene, allows for isolating and ranking salient segments in video clips. Ranking video clips or video segments within a video clip according to the number of detected camera-flashes in the scene of a given video stream can be relevant for automatic or quick indexing, browsing and retrieval of video data and it alleviates fast search for important sections of video clips within large databases. For example, the invention can be used in multimedia database browsing systems, remote video-based education, video summarization, video-on-demand services, or quickly indexing important segments in live video capture etc..

### Background Art

Unconstrained video clips belong to no specific source or method of capture or method of distribution. It can be any type of video stream from personal or family events (birthdays, recitals etc.) using a handheld camera to publicly transmitted video streams such as sports events, news or entertainment events available on the World Wide Web or as part of the television programming such as news and entertainment channels, documentaries, movies and the like. In many cases these unconstrained video streams are available without any indexing information, i.e. the important segments of the video clip are unknown unless the complete clip is viewed and consciously marked by a user. Additionally, because of a recent development of the data storage technology, video compression techniques and broadband internet connections, the amount of the available video information is greatly increased. In such an environment, search for a desired video material is a difficult problem. Hence, efficient search and indexing procedures becomes necessary.

To this end, many automatic processing methods that extract key or important segments in video clips exist. Such automatic methods enable users to quickly and easily browse to relevant segments without viewing the complete video document sequentially.

Video search and indexing has been an active topic of the recent research in video summarization, where a video content has to be represented in a user-friendly manner. For instance, in Truong and Venkatesh, "Video abstraction: a systematic review and classification", ACM Transactions on Multimedia Computing, Communications and Applications, vol. 3, issue 1, 2007, video clips are summarized by sets of key-frames (i.e. still images) or condensed video skims, which give the user maximal information about the content. In general it is desirable to match the video search capability with the expectations of the human user and therefore video search has been used in conjunction semantic video processing. Object and scene retrieval has been applied in Sivic and Zisserman, "Video google: a text retrieval approach to object matching in videos", IEEE International Conference on Computer Vision, 2003. Several semantic video search methods have been developed within the MediaMill engine, as explained in Worring et al., "The MediaMill semantic video search engine", IEEE International Conference on Acoustics, Speech and Signal Processing, 2007. Moreover, a multimodal semantic search method over video broadcast news databases (CuVid) has been proposed in Chang et al., "Columbia University's semantic video search engine", ACM Conference on Image and Video Retrieval, 2007.

An important step in video search and indexing is detection of scene changes. While many types of scene changes can be localized in the detection such as colour transition, facial expression changes, scene changes or the like, the change caused by transition of illumination of the scene carries significant information and it is easily detectable. Such a transition can be slow (fade in or fade out, camera adaptation, etc.) or sharp (scene cut, flash light, etc.). For example, EP 0 659 016 A2 describes a technique for video cut detection. Yanjun Qi et al., "Supervised classification for video shot segmentation", Proc. of the 2003 Int. Conf. on Multimedia and Expo, BALTIMORE, MARYLAND, USA, vol. 2, 6 July 2003, pages 689-692, proposes a classification approach for detecting shot boundaries in video. Further, a method for detection of both illumination transitions has been proposed in Qian et al., "Effective fades and flashlight detection based on accumulating histogram difference", IEEE Transactions on Circuits and Systems for Video Technology, vol. 16, no. 10, 2006, where the difference of histograms of the consecutive frames is analyzed and classified into several cases. However, computation of accumulating histogram differences is complex which can cause on one hand that the performance of the method can be low and/or on the other hand that the technical requirements to a system for performing the method can be high.

Another method that has addressed flash detection in videos has been described WO 2009/090586 A1, where the difference between consecutive frames is used to detect light source in the scene. However, this method is limited to the detection of flash light sources in the frames. Furthermore, in a method described in WO 2009/075845 A1, the flash is detected using threshold of normalized differences of the colour video components Y, U and V. However, this method involves the heuristic definition of the thresholds which can limit the applicability of it and the method also is computationally and conceptionally comparably complex.

Therefore, there is a need for a method allowing a comparably simple, reliable and efficient processing of video data particularly for detection of flash illuminated scenes in video clips.

## Disclosure of the Invention

According to the invention this need is settled by a method as it is defined by the features of independent claim 1, by a computer program as it is defined by the features of independent claim 17 and by a system as it is defined by the features of independent claim 18. Preferred embodiments are subject of the dependent claims.

In particular, the invention deals with a method of processing video data wherein the video data is extracted to a plurality of frames and the single frames are analysed for detecting a flash illuminated scene. Thereby, each of the frames is segmented into spatial groups of elements of predefined characteristics and each segmented frame is analysed with regard to illumination transition of its segments. The term "predefined characteristics" in this context relates to grouping characteristics of the elements of the frame such as, e.g., groups of foreground elements and background elements of the frame, illumination intensity groups of the frame or the like. In the analysis of the illumination transition of the segments of a frame, the method can include a detection of illumination transitions and in particular a detection of the sharp illumination transitions being caused by flash light. These transitions can be generated in several ways such as camera flash light source, lighting, strobe-lights, etc., but a common property is that the illumination is changing as a pulse function of time, i.e. an abrupt increase followed by an abrupt decrease of the illumination. Typically, these changes caused by flash last only for a few frames in the video clip and take no more than 200 ms.

The method according to the invention allows an implementation involving comparably simple computations. For example, no computation of accumulating histogram differences is necessary. Further, in the method according to the invention it is not necessary to heuristically define any input parameters such as thresholds or the like. Like this, improved reliability, reproducibility and traceability can be achieved. Still further, the method according to the invention allows the detection of scenes in video clips whose illumination changes noticeably because of flash light sources rather than detecting the flash light sources themselves. The method uses higher level information by segmenting the images into distinct parts and extracting signal measures for flash illumination detection from each segment. Like this, the quality of the video data processing can be improved and the field of its possible applications can be extended. Summarizing the above, the method according to the invention allows a comparably simple and efficient video data processing and in particular detection of flash illuminated scenes in video clips and related ranking thereof.

Preferably, in the method according to the invention luminance components are extracted from each segment of each segmented frame. Such extraction of luminance components from a segment allows to concentrate the computation for detecting flash illumination on a reduced set of parameters and to discard other parameters. Thus, a comparably simple and efficient computation is possible. The luminance component extraction preferably comprises obtaining the frames of the video data in a RGB-format wherein the RGB components are converted into the luminance component wherein the RGB-format can also only be used internally after decompressing the video data into raw data, i.e. into a sequence of frames. Thereby, said conversion preferably is implemented by using floating point operations. Alternatively, said conversion preferably is approximated by using integer operations. This allows a comparably efficient processing of video data of the wide spread RGB-format. Thereby, RGB-components of the RGB-format are preferably converted into the luminance component by applying the formula $Y = W_R \cdot R + W_G \cdot G + W_B \cdot B$, wherein Y is the luminance component, R is the red-component of the RGB-format, G is the green-component of the RGB-format, B is the blue-component of the RGB-format, $W_R + W_G + W_B = 1$ and at least two of the coefficients $W_R$, $W_G$ and $W_B$ are chosen according to a colour model of the video data. Such RGB-components conversion can be a comparably simple and efficient implementation of the luminance components extraction.

Preferably, a mean of the luminance components is calculated for each segment of each segmented frame. Like this, the luminance components of a segment can be reduced to one parameter or feature which is further processed. This allows further improving simplicity and efficiency of the method according to the invention. As an example of such mean calculation the luminance components calculated from the RGB-components of each pixel of a segment can be concentrated to one parameter or feature per segment. Such parameters or features the calculation of which is not relying on a plurality of consecutive frames is also named "non-differentials" hereinbelow. Preferably, differences of the means of luminance components of corresponding segments of consecutive segmented frames are also calculated. Like this a second parameter or feature being characteristic for flash illumination of a video clip scene can be extracted which can further improve the quality of the flash illumination detection in a comparably easy manner. Such parameters or features the calculation of which is relying on a plurality of consecutive frames is also named "differentials" hereinbelow.

Preferably, in the method according to the invention the segmentation of each of the frames into spatial groups of elements of predefined characteristics comprises plural segmentation of each of the frames by applying a plurality of different segmentation methods such that a corresponding plurality of segmented frames is provided per frame. After this plural segmentation each extracted segment of each frame can be processed independently in the following steps such that this plural segmentation step has multiple output streams, wherein the number of outputs is equal to the number of applied segmentation methods. Such plural segmentation allows an improved efficiency of the detection of flash illumination in video data without essentially increase the computational complexity of the method. Thereby, the segmentation methods preferably are rectangular segmentation, foreground-background segmentation, illumination intensity histogram-based segmentation, colour-based segmentation or no segmentation, wherein rectangular segmentation can be non-adaptive quad-tree and no segmentation means that the entire frame is treated as a single segment. Preferably, segmentation features of the plurality of segmented frames are consolidated per frame. In this context, the term "segmentation features" corresponds to luminance components, mean of luminance components, differences of these means and the like. Consolidation can preferably correspond to augmentation. Like this, the quality and efficiency can be further improved.

Preferably, in the method according to the invention a set of reference data is created by manually labelling each of the frames with regard to the presence of a flash. This manual reference data creation can typically be performed prior productively processing the video data. For example, this reference data creation can be performed as a training step using one or more reference video data sets. The reference data preferably comprise a global mean and a global variance calculated from the consolidated segmentation features and the manual labels.

Preferably, in the method according to the invention important normalized features are extracted. In this context, the term "normalized features" corresponds to consolidated segmentation features, manual labels, global means and/or global variances. Of the normalized features those are important for the method which are retained according to specific criteria, wherein it is also possible that all normalized features are treated as important. Such extraction of important normalized features allows to further improve the efficiency of the method. Thereby, the extraction of the normalized features is preferably performed by applying principal component analysis. The term "principal component analysis" in this context relates to a mathematical procedure that transforms a number of possibly correlated variables into a smaller number of uncorrelated variables called principal components wherein the first principal component accounts for as much of the variability in the data as possible, and each succeeding component accounts for as much of the remaining variability as possible. Like this, the initially extracted parameter or feature set, which has many components, can be simplified. Hereinbelow, the number of parameters or features in such a set is also called dimensionality, since each feature can be considered as a dimension of a parameter or feature vector. The reduction of the dimensionality can be done using the principal component analysis allowing a comparably simple and fast application of the method.

Preferably, in the method according to the invention eigenvalues of the normalized features are calculated and the eigenvalues are ordered. Thereby, the normalized features with the highest eigenvalues are preferably retained such that the sum of squares of the retained eigenvalues is above a predefined threshold p, wherein p is larger than zero and smaller or equals the sum of squares of all eigenvalues. In this context, the term "square" also relates to energy as used hereinbelow.

Preferably, an automatic label with regard to the presence of a flash is associated to each of the frames. Thereby, the video data is preferably ranked with regard to the automatic labels. Such a method allows for an efficient ranking of the video data. Ranking video segments using flash detection and number of detected flashes has a variety of applications. For example, in "Audiovisual celebrity recognition in unconstrained web videos" by M.E Sargin, H. Aradhye, P.J. Moreno and M. Zhao published in International conference in acoustics speech and signal processing (ICASSP) 2009. ISBN: 978-1-4244-35 2353-8, the authors describe a method to recognize celebrities in unconstrained video. Using flash detection and video ranking described in this invention, it is also possible to isolate video segments in which a celebrity is present and also process videos for celebrity recognition according to the ranking.

Further aspects of the invention relate to a computer program for processing video data, comprising means for performing the method described above and to a system comprising a computing means and a memory means wherein the computing means and the memory means are adapted to perform the method described above. Such computer programs and systems allow for a efficient, flexible and economic implementation of the method according to the invention.

These and other aspects of the invention will be apparent from and elucidated with reference to the embodiment(s) described hereinafter.

Brief Description of the Drawings

The method according to the invention, the computer program according to the invention and the system according to the invention are described in more detail hereinbelow by way of exemplary embodiments and with reference to the attached drawings, in which:

Fig. 1    shows a schematic flow chart of an embodiment of the method according to the invention particularly with regard to feature extraction;

Fig. 2    shows a schematic flow chart of the method from Fig. 1 particularly with regard to a training phase;

Fig. 3    shows a schematic flow chart of the method from Fig. 1 particularly with regard to automatic labelling;

Fig. 4    a schematic flow chart of the method from Fig. 1 particularly with regard to video ranking; and

Fig. 5    a schematic view of an embodiment of a system according to the invention including an embodiment of a computer program according to the invention.

Mode(s) for Carrying Out the Invention

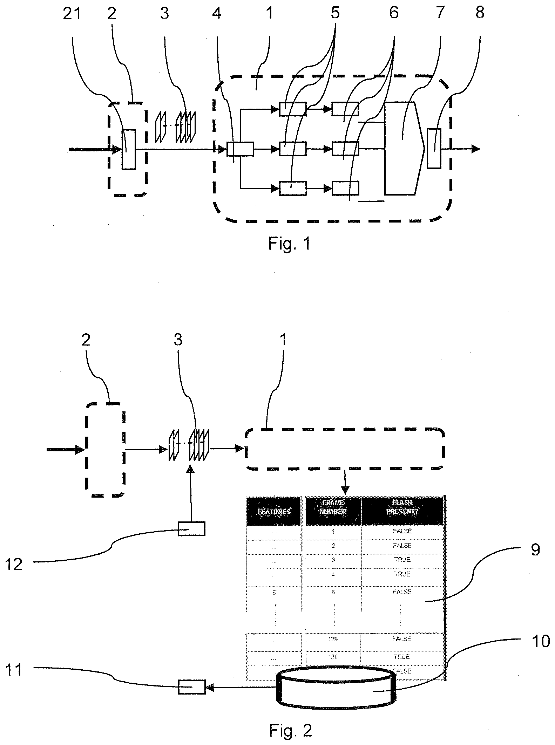

Fig. 1 shows an embodiment of the method according to the invention comprising frame extraction 2 for extracting input video data or an input video stream, respectively, to a plurality of frames. The frame extraction 2 also includes decompressing 21 the video data. The output of the frame extraction 2 is a sequence of frames 3 which is used in feature extraction 1. The feature extraction 1 comprises segmentation 4 of the sequence of frames 3 applying three segmentation methods such that three streams of segmented frames are provided by the segmentation 4. To each of the streams of segmented frames luminance extraction 5 is applied in which a luminance component is extracted and feature computation 6. The computed features of the streams of segmented frames are then augmented and normalized 7 in order to reduce their dimensionality 8.

The following applies to the rest of this description. If, in order to clarify the drawings, a figure contains reference signs which are not explained in the directly associated part of the description, then it is referred to previous description sections.

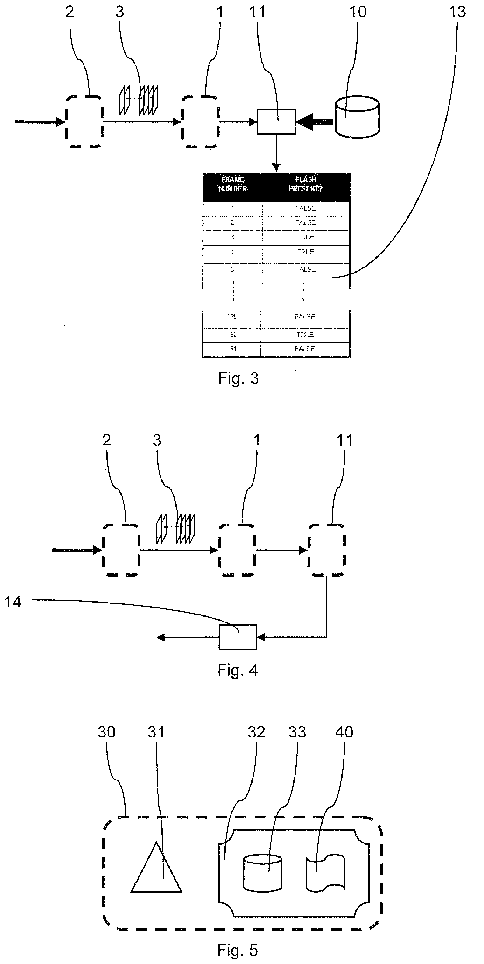

In Fig. 2 a training phase is shown in which a human operator or user 12 labels each of the frames of the sequence of frames 3 with regard to flash illumination. Thereby, a set of reference data is created and stored as labelled feature vectors 10. The labelled feature vectors are then used in a pattern recognition algorithm 11. Fig. 3 shows automatic labelling of a sequence of frames by the pattern recognition algorithm 11 using the labelled feature vectors wherein an automatic labelled set of illumination data 13 is created. In Fig. 4 it is shown that the set of illumination data 13 is used in post processing 14 such as ranking of the video data.

Summarizing the invention, it is an objective of the method to determine if a current frame of the video data or in a given video clip, respectively, is flash illuminated. Furthermore, ranking is also implemented wherein video clips or segments within a video clip are ordered/ranked according to the number of detected flash instances.

The required input to the method is video data such as a video clip. The intermediate flash-detection output is a series of binary labels denoted as "flash" and "no-flash" that are associated to each extracted frame. This information stream is statistically measured and the result is used subsequently to rank a given video clip or a segment of video clip. The embodiment of the method shown in the Figs. can be broken down into the blocks/steps illustrated. The Figs. comprise the following blocks/steps for feature extraction: decompressing video clip into raw data 2; segmentation 4; extraction of luminance Y component 5; feature computation 6; augmentation and normalization of the features 7; and dimensionality reduction 8.

The input in the block 2 is a video clip as video data. The block 4 applies a variety of segmentation methods to the decompressed raw frames and, thus, it provides a set of outputs. These outputs are separately processed in the blocks 5 and 6. Finally, the parallel outputs are joint in block 7 and 8.

The method is implemented in three functionalities: offline training; online deployment for flash detection; and online deployment for ranking. First, within the training functionality, manually or semi-automatically, i.e. under a human supervision, annotated video clips are used to train the pattern recognition algorithm. This process is marked as block 11. Once the training is complete, the method is applied to non-annotated video clips for flash detection in the deployment functionality. Finally, the number of flashes detected over a time period is measured to determine the relative rank of the video segment being processed.

In the following the embodiment of the method according to the invention is explained in more detail, first particularly with regard to each block of the detection and ranking methods. The main points covered here are the three functionalities: training; flash-detection deployment; and video-ranking deployment.

A. Decompressing video clips into raw data:

The goal of this block 2 is to extract the raw video data from the compressed input version. The raw data is represented as sequences of frames in the raw RGB format and the subsequent processing is applied to these uncompressed frames. Thus, the input in the block 2 can be any relevant compressed video format, whereas the output is always the uncompressed sequence of RGB frames 3. The implemented decompression algorithm has to match the input compressed video format. The extracted RGB frames are indexed in time.

Notice that the spatial and temporal resolution of the video clip, i.e. the number of the horizontal and vertical lines in the frames and the number of frames per time unit, respectively, are unchanged by the decompression process. However, compression is usually lossy and, thereof, it introduces a certain distortion to the original signal. This distortion does not affect significantly the subsequent processing as long as it is bounded by an acceptable visual quality of the recorded video.

B. Segmentation of frame sequences:

Segmentation 4 is applied to each frame of the processed video clip separately. Thus, the task of the segmentation block 4 is to spatially group the contiguous elements with the same predefined characteristics within a frame so that the feature extraction block 1 allows for more efficient flash illumination detection. Different characteristics are addressed in the segmentation process and, thereof, there are several segmentation methods. In particular, any combination of one or more of the five segmentation methods can be applied. These methods are: rectangular segmentation (non-adaptive quad-tree); foreground-background segmentation; illumination intensity histogram-based segmentation; colour-based segmentation; and no segmentation (entire frame as a single segment).

Each extracted segment is processed independently in the subsequent blocks 5 and 6. As a result, this block has multiple output streams, where the number of outputs is equal to the number of applied segmentation procedures.

C. Extraction of luminance Y component:

The influence of the illumination changes caused by flash light on the colour components, R, G and B is correlated. Hence, instead of these three 20 components, only the luminance component is analyzed further to remove this correlation and to reduce both the complexity of the processing and dimensionality of the stored information. To extract the luminance component from the RGB frames, each frame is converted using the linear transform

$$Y = W_R \cdot R + W_G \cdot G + W_B \cdot B,$$

where $W_R + W_G + W_B = 1$ and the coefficients $W_R$ and $W_B$ are chosen according to the colour model of the input video format. The conversion can be implemented using floating point operations or approximated using integer operations in case computational complexity has to be saved. This block is depicted as 5 in Fig. 1.

D. Feature computation:

Two types of parameters or features, respectively, are computed from the luminance Y components in block 6 for each segment of the frames: non-differentials and differentials.

In the shown embodiment, the non-differentials are calculated as the mean of the luminance coefficients within the analyzed segments so that one feature per segment is generated. Thus, the number of the non-differentials for each frame is equal to the number of extracted segments in block 4. The differentials are calculated as the difference between the mean of the luminance coefficients across each segment in consecutive frames. Therefore, the number of features is equal to the number of segments in a group of consecutive frames. As a consequence, the detection is delayed by the duration of the corresponding group of frames.

E. Augmentation (normalization) of the features:

The differentials and non-differentials are calculated for each segmentation method or segmentation procedure, respectively, in block 4. This results in multiple streams of information per frame from the video clip. As a result, the dynamic range and the offset differ from each other depending on the illumination conditions and the method of calculation for a given frame and the applied segmentation procedure. To make the values of the different feature streams comparable, in block 7, all the features belonging to a given time index are consolidated by augmenting the features from each stream and subsequently a global mean and global variance is calculated for a given set of semi-automatically labelled, i.e. under a human supervision, video clips. Subsequently all the extracted features for an unknown video stream in the online deployment are also normalized using the global mean and global variance values obtained in this step.

F. Dimensionality reduction:

All features extracted in block 6 and normalized in block 7 are processed together in a step of principal component analysis (PCA). The goal of PCA is to extract the important low-correlated features from the input set while keeping the total number of features, i.e. dimensionality of the feature set, is reduced.

First, the eigenvalues are computed and ordered in descending order of magnitudes for all the input features. Then, only the minimal number of the features with the highest magnitudes (or variances) are retained so that the sum of energy of the eigenvalues is above a given threshold p, such that $0 < p \leq E$, where E is the total sum of energy. Typically, $p = 0.90 \cdot E$. The retained features are forwarded to the next block as a series of numbers for each frame.

The outputs of blocks 4 to 8 comprise the feature extraction stage (jointly denoted as block 2). Feature extraction is performed for each video segment presented to the system. A flash or no-flash is detected based on the signal information extracted in this stage in combination with a pattern recognition algorithm.

G. Functionalities:

According to the embodiment of the invention shown in the Figs., the method is applied within three functionalities: Offline-training as illustrated in Fig. 2; online-deployment for flash-detection as illustrated in Fig. 3; and online-deployment for video ranking as illustrated in Figure 4. During training, a set of annotated data is created. The annotation of the data assumes that each frame of a chosen video clip or a set of video clips is labelled semi-automatically, i.e. under human supervision, as "flash" or "no-flash". Then, this data is analyzed in the method and the pattern recognition algorithm is tuned for obtaining best detection accuracy. During deployment, the pattern recognition algorithm which may or may not include the labelled data obtained previously is used with non-annotated data as input. The output of the offline-training step is a trained pattern recognition algorithm 11. The online-deployment is illustrated in Figs. 3 and 4. Fig. 3 depicts the flash detection system that takes a raw video stream as the input and outputs a binary signal ("TRUE" or "FALSE") for each frame that is detected to have a flash or otherwise respectively. Fig. 4 shows the video ranking system that uses the flash detection system described in Fig. 3.

Regarding the offline-training shown in Fig. 2, the goal is to label each frame in the video clip or the sequence of frames 3 as "flash" or "no-flash" according to the set of features extracted in block 2. These labels refer to the two possible outcomes of the detection, that is, the analyzed frame is or is not flash illuminated, respectively. In embodiment of the inventive method shown in the Figs., a collection of video clips that comprises clips with and without flash is input to the system. A human operator or user 12 sequentially checks out and manually labels each frame as "flash" or "no-flash". This results in table 9 that contains the frame number and an additional field that marks each frame to have a flash or no-flash. In Fig. 2 it is shown that frames no. 3, no. 4 and no. 131 are labelled to contain flash illumination, whereas the others are labelled as non-flash illuminated. In addition to this, feature extraction 1 is applied to the frame sequence 3 and augmented to the table 9. This results in table 9 having each feature vector extracted from each frame in the sequence as containing flash illumination or otherwise. This training data is the collection of labelled feature vectors 10. This collection 10 is used as a reference to train the pattern recognition algorithm 11, that learns to classify a given feature vector from a frame into flash or no-flash by learning a deterministic function or by learning parameters of a probabilistic function. The support-vector-machine classifier described in "A Tutorial on Support Vector Machines for Pattern Recognition" by C.J.C Burges in Data Mining and Knowledge discovery Volume 2, Number 2 / June, 1998 with ISSN 1384-5810, can be used in one embodiment of the method according to the invention. In another embodiment, it is also possible to use a nearest neighbor classifier as described in "Nearest Neighbor Pattern Classification" by T. Cover and Hart. P in IEEE Transactions on Information Theory Volume: 13, Issue: 1 25 ISSN: 0018-9448, on page(s): 21- 27. In this work, a deterministic function is replaced by direct comparison with the labeled data 11 using a distance metric such as Euclidean distance metric.

Regarding the online-deployment for flash detection shown in Fig. 3, the previously described blocks are used. Block 2 is used to convert the input video stream into a sequence of decompressed frames 3. Later, the feature extraction stage 2 is used to extract signal features from each frame. This is the input to the previously trained pattern recognition block 11, which may use the labelled data 10. The output of the pattern recognition algorithm block is a series of "TRUE" or "FALSE" for each time-indexed frame for flash or no-flash respectively.

Regarding the online-deployment for video ranking shown in Fig. 4 the flash detection block from Fig. 3 described previously is used. Blocks 2, 3, 1 and 11 are sequentially used as described. The output of block 11 is a binary signal ("TRUE"/"FALSE" or "1"/"0") that labels each frame as a flash or no-flash, respectively. This binary signal is shown as $D(i_{frame})$. This signal over a period of time, such as from a few frames, or seconds to a whole clip, is used to calculate the rank of a given video stream or a segment of a given video stream. The video ranking devised in this invention is based on the fact that if a camera records a scene with multiple flashes at different segments of the capture, the most important segment containing the stream can be deduced by estimating the number of flashes detected using the previously described flash detection algorithm.

In the embodiment of the method according to the invention shown in the Figs., the rank is calculated proportional to the number of non-zero values in $D(i_{frame})$ over a period of time or over a set of frames.

This is: Video Rank (segment $i_L$ to $i_U$) = $sum(D(i_{frame}))$ where $i_L < i_{frame} < i_U$

By appropriately setting $i_L$ and $i_U$ the rank value can be calculated for a video segment or a whole video clip. If $i_L = i_U$ then it simply scales back to the flash detection module presented before.

Fig. 5 shows an embodiment of a system 30 according to the invention comprising a computing means 31 such as a central processing unit (CPU) or the like and a memory means 32 such as random access memory (RAM) and/or a hard disk. On the memory means a computer program 40 according to the invention is stored as well as a database 33 system comprising the labelled data 10. The system 30 is adapted such that the computing means 31 can execute the computer program 40 in order to perform the method described above.

While the invention has been illustrated and described in detail in the drawings and foregoing description, such illustration and description are to be considered illustrative or exemplary and not restrictive. It will be understood that changes and modifications may be made by those of ordinary skill. In particular, the present invention covers further embodiments with any combination of features from different embodiments described above and below.

The invention also covers all further features shown in the Figs. individually although they may not have been described in the afore or following description.

Furthermore, in the claims the word "comprising" does not exclude other elements or steps, and the indefinite article "a" or "an" does not exclude a plurality. A single unit may fulfill the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A method of processing video data wherein the video data is extracted (2) to a plurality of frames (3) and the single frames are analysed for detecting a flash illuminated scene, wherein each of the frames (3) is segmented into spatial groups of elements of predefined characteristics (4) and each segmented frame is analysed with regard to changes of segment features due to illumination transitions, wherein said segmentation into spatial groups of elements is performed using at least one of foreground-background segmentation, illumination intensity histogram-based segmentation, and color-based segmentation, and
wherein said analysis is performed using a pattern recognition algorithm (11) being configured to learn, based on a collection of labelled feature vectors (10), to classify a given feature vector from a frame into flash and non-flash by learning a deterministic function or by learning parameters of a probabilistic function.

2. The method according to claim 1, wherein luminance components are extracted (5) from each segment of each segmented frame.

3. The method according to claim 2, wherein the luminance component extraction comprises obtaining the frames of the video data in a RGB-format wherein the RGB components are converted into the luminance component.

4. The method according to claim 3, wherein RGB-components of the RGB-format are converted into the luminance component by applying the formula

$$Y = W_R \cdot R + W_G \cdot G + W_B \cdot B,$$

wherein Y is the luminance component, R is the red-component of the RGB-format, G is the green-component of the RGB-format, B is the blue-component of the RGB-format, $W_R + W_G + W_B = 1$ and at least two of the coefficients $W_R$, $W_G$ and $W_B$ are chosen according to a colour model of the video data.

5. The method according to any one of claims 2 to 4, wherein a mean of the luminance components is calculated for each segment of each segmented frame.

6. The method according to claim 5, wherein differences of the means of luminance components of corresponding segments of consecutive segmented frames are calculated.

7. The method according to any one of the preceding claims, wherein the segmentation of each of the frames into spatial groups of elements of predefined characteristics (4) comprises plural segmentation of each of the frames (3) by applying a plurality of different segmentation methods such that a corresponding plurality of segmented frames is provided per frame.

8. The method according to claim 7, wherein segmentation features of the plurality of segmented frames are consolidated by augmenting the segmentation features per frame.

9. The method according to any one of the preceding claims, wherein a set of reference data is created by manually labelling each of the frames of one or more reference video data sets with regard to the presence of a flash illuminated scene.

10. The method according to claims 8 and 9, wherein the reference data comprise a global mean per frame and a global variance per frame calculated from the consolidated segmentation features and the manual labels.

11. The method according to any one of claims 7 to 10, wherein low-correlated normalized features are extracted.

12. The method according to claim 11, wherein the extraction of the normalized features is performed by applying principal component analysis.

13. The method according to claim 11 or 12, wherein eigenvalues of the normalized features are calculated and the eigenvalues are ordered.

14. The method according to claim 13, wherein the normalized features with the highest eigenvalues are retained such that the sum of squares of the retained eigenvalues is above a predefined threshold p, wherein p is larger than zero and smaller or equals the sum of squares of all eigenvalues.

15. The method according to any one of the preceding claims, wherein an automatic label with regard to the presence of a flash is associated to each of the frames.

16. The method according to claim 15, wherein the video data is ranked with regard to the automatic labels.

17. A computer program for processing video data comprising instructions which, when the program is executed by a computer, cause the computer to carry out the method according to any one of the preceding claims.

18. A system (30) comprising a computing means (31) and a memory means (32) wherein the computing means (31) and the memory means (32) are adapted to perform the method according to any one of claims 1 to 16.

**Patentansprüche**

1. Verfahren zum Verarbeiten von Videodaten wobei die Videodaten in eine Vielzahl von Rahmen (3) extrahiert werden (2) und die einzelnen Rahmen zum Ermitteln einer blitzbeleuchteten Szene analysiert werden, wobei jeder der Rahmen (3) in räumliche Gruppen von Elementen mit vordefinierten Eigenschaften (4) segmentiert wird und jeder segmentierte Rahmen hinsichtlich Änderungen von Segmentmerkmalen infolge von Beleuchtungsübergängen analysiert wird,
wobei die Segmentierung in räumliche Gruppen von Elementen unter Verwendung einer Vordergrund-Hintergrund-Segmentierung und/oder einer auf einem Beleuchtungsintensitätshistogramm beruhenden Segmentierung und/oder einer farbbasierten Segmentierung durchgeführt wird, und
wobei die Analyse mittels eines Mustererkennungsalgorithmus (11) durchgeführt wird, der konfiguriert ist, beruhend auf einer Sammlung von markierten Merkmalsvektoren (10) durch Erlernen eine deterministischen Funktion oder durch Erlernen von Parametern einer probabilistischen Funktion zu lernen, einen gegebenen Merkmalsvektor aus einen Rahmen in einen Blitz und Nicht-Blitz einzuteilen.

2. Verfahren nach Anspruch 1, wobei aus jedem Segment jedes segmentierten Rahmens Luminanzkomponenten extrahiert werden (5).

3. Verfahren nach Anspruch 2, wobei die Luminanzkomponentenextraktion das Erhalten von Rahmen der Videodaten in einem RGB-Format aufweist, wobei die RGB-Komponenten in die Luminanzkomponente umgewandelt werden.

4. Verfahren nach Anspruch 3, wobei RGB-Komponenten des RGB-Formats durch Anwenden der Formel

$$Y = W_R \cdot R + W_G \cdot G + W_B \cdot B,$$

in die Luminanzkomponente umgewandelt werden, wobei Y die Luminanzkomponente ist, R die Rot-Komponente des RGB-Formats ist, G die Grün-Komponente des RGB-Formats ist, B die Blau-Komponente des RGB-Formats ist, $W_R + W_G + W_B = 1$ und mindestens zwei der Koeffizienten $W_R$, $W_G$ und $W_B$ gemäß einem Farbmodell der Videodaten gewählt werden.

5. Verfahren nach einem der Ansprüche 2 bis 4, wobei ein Mittelwert der Luminanzkomponenten für jedes Segment von jedem segmentierten Rahmen berechnet wird.

6. Verfahren nach Anspruch 5, wobei Differenzen der Mittelwerte der Luminanzkomponenten von entsprechenden Segmenten von aufeinander folgenden segmentierten Rahmen berechnet werden.

7. Verfahren nach einem der vorhergehenden Ansprüche, wobei die Segmentierung von jedem der Rahmen in räumliche Gruppen von Elementen mit vordefinierten Eigenschaften (4) die mehrfache Segmentierung von jedem der Rahmen (3) durch Anwenden einer Vielzahl von unterschiedlichen Segmentierungsverfahren aufweist, so dass eine entsprechende Vielzahl von segmentierten Rahmen pro Rahmen bereitgestellt wird.

8. Verfahren nach Anspruch 7, wobei Segmentierungsmerkmale der Vielzahl der segmentierten Rahmen durch Erweitern der Segmentierungsmerkmale pro Rahmen konsolidiert werden.

9. Verfahren nach einem der vorhergehenden Ansprüche, wobei durch manuelles Markieren von jedem der Rahmen von einem oder mehreren Referenzvideodatensätzen hinsichtlich des Vorhandenseins einer blitzbeleuchteten Szene ein Satz von Referenzdaten erzeugt wird.

10. Verfahren nach Anspruch 8 und 9, wobei die Referenzdaten einen globalen Mittelwert pro Rahmen und eine globale Varianz pro Rahmen aufweisen, die aus den konsolidierten Segmentierungsmerkmalen und den manuellen Markierungen berechnet werden.

**11.** Verfahren nach einem der Ansprüche 7 bis 10, wobei niedrig korrelierte normierte Merkmale extrahiert werden.

**12.** Verfahren nach Anspruch 11, wobei die Extraktion der normierten Merkmale durch Anwenden einer Hauptkomponentenanalyse durchgeführt wird.

**13.** Verfahren nach Anspruch 11 oder 12, wobei Eigenwerte der normierten Merkmale berechnet werden und die Eigenwerte geordnet werden.

**14.** Verfahren nach Anspruch 13, wobei die normierten Merkmale mit den höchsten Eigenwerten so erhalten werden, dass die Summe der Quadrate der erhaltenen Eigenwerte über einer vordefinierten Schwelle p liegt, wobei p größer als null und kleiner oder gleich der Summe der Quadrate aller Eigenwerte ist.

**15.** Verfahren nach einem der vorhergehenden Ansprüche, wobei mit jedem der Rahmen eine automatische Markierung hinsichtlich des Vorhandenseins eines Blitzes verbunden ist.

**16.** Verfahren nach Anspruch 15, wobei die Videodaten hinsichtlich der automatischen Markierungen eingestuft werden.

**17.** Computerprogramm zum Verarbeiten von Videodaten, das Befehle aufweist, die, wenn das Programm durch einen Computer ausgeführt wird, den Computer veranlassen, das Verfahren nach einem der vorhergehenden Ansprüche auszuführen.

**18.** System (30), das ein Rechenmittel (31) und ein Speichermittel (32) aufweist, wobei das Rechenmittel (31) und das Speichermittel (32) eingerichtet sind, das Verfahren nach einem der Ansprüche 1 bis 16 auszuführen.

## Revendications

**1.** Procédé de traitement de données vidéo, où les données vidéo sont extraites (2) dans une pluralité de trames (3) et les différentes trames sont analysées pour détecter une scène éclairée par flash, où chacune des trames (3) est segmentée en groupes spatiaux d'éléments à caractéristiques prédéfinies (4) et chaque trame segmentée est analysée quant aux variations de caractéristiques de segments pour cause de transitions d'éclairage, où la segmentation en groupes spatiaux d'éléments est exécutée par segmentation premier plan/arrière-plan et/ou segmentation à base d'histogramme d'intensité d'éclairage et/ou segmentation à base chromatique, et où l'analyse est exécutée au moyen d'un algorithme de reconnaissance de motif (11) configuré pour apprendre, sur la base d'une collection de vecteurs de caractéristiques étiquetés (10), à classer en flash et non-flash un vecteur de caractéristiques donné à partir d'une trame, par apprentissage d'une fonction déterministe ou par apprentissage de paramètres d'une fonction probabiliste.

**2.** Procédé selon la revendication 1, où des composantes de luminance sont extraites (5) de chaque segment de chaque trame segmentée.

**3.** Procédé selon la revendication 2, où l'extraction de composantes de luminance comprend l'obtention des trames des données vidéo en format RGB, les composantes RGB étant converties en composante de luminance.

**4.** Procédé selon la revendication 3, où les composantes RGB du format RGB sont converties en composante de luminance en appliquant la formule

$$Y = W_R \cdot R + W_G \cdot G + W_B \cdot B,$$

où Y est la composante de luminance, R est la composante rouge du format RGB, G est la composante verte du format RGB, B est la composante bleue du format RGB, $W_R + W_G + W_B = 1$, et au moins deux des coefficients $W_R$, $W_G$ et $W_B$ sont choisis en fonction d'un modèle chromatique des données vidéo.

**5.** Procédé selon l'une des revendications 2 à 4, où une moyenne des composantes de luminance est calculée pour chaque segment de chaque trame segmentée.

**6.** Procédé selon la revendication 5, où sont calculées les différences des moyennes des composantes de luminance de segments correspondants de trames segmentées consécutives.

**7.** Procédé selon l'une des revendications précédentes, où la segmentation de chacune des trames en groupes spatiaux d'éléments à caractéristiques prédéfinies (4) comprend la segmentation plurielle de chacune des trames (3) par application de plusieurs procédés de segmentation différents, de manière à obtenir une pluralité de trames segmentées correspondantes par trame.

**8.** Procédé selon la revendication 7, où les caractéristiques de segmentation de la pluralité de trames segmentées sont consolidées par augmentation des caractéristiques de segmentation par trame.

**9.** Procédé selon l'une des revendications précédentes, où un ensemble de données de référence est créé par étiquetage manuel de chacune des trames d'un ou de plusieurs ensembles de données vidéo de référence quant à la présence d'une scène éclairée par flash.

10. Procédé selon les revendications 8 et 9, où les données de référence comprennent une moyenne globale par trame et un écart global par trame calculés à partir des caractéristiques de segmentation consolidées et des étiquettes manuelles.

11. Procédé selon l'une des revendications 7 à 10, où des caractéristiques normalisées faiblement corrélées sont extraites.

12. Procédé selon la revendication 11, où l'extraction des caractéristiques normalisées est exécutée en appliquant une analyse de composantes principales.

13. Procédé selon la revendication 11 ou la revendication 12, où les valeurs propres des caractéristiques normalisées sont calculées, et où les valeurs propres sont ordonnées.

14. Procédé selon la revendication 13, où les caractéristiques normalisées avec les valeurs propres les plus élevées sont retenues, de telle manière que la somme des carrés des valeurs propres retenues est supérieure à un seuil p prédéfini, p étant supérieur à zéro et inférieur ou égal à la somme des carrés de toutes les valeurs propres.

15. Procédé selon l'une des revendications précédentes, où une étiquette automatique quant à la présence d'un flash est associée à chacune des trames.

16. Procédé selon la revendication 15, où les données vidéo sont classées par étiquettes automatiques.

17. Programme informatique pour le traitement de données vidéo, comprenant des instructions qui, lorsque le programme est exécuté par un ordinateur, provoquent l'exécution par l'ordinateur du procédé selon l'une des revendications précédentes.

18. Système (30) comprenant une unité de calcul (31) et une unité de mémoire (32), où l'unité de calcul (31) et l'unité de mémoire (32) sont prévues pour l'exécution du procédé selon l'une des revendications 1 à 16.

Fig. 1

Fig. 2

| FRAME NUMBER | FLASH PRESENT? |
|---|---|
| 1 | FALSE |
| 2 | FALSE |
| 3 | TRUE |
| 4 | TRUE |
| 5 | FALSE |
| ⋮ | ⋮ |
| 129 | FALSE |
| 130 | TRUE |
| 131 | FALSE |

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0659016 A2
- WO 2009090586 A1
- WO 2009075845 A1

### Non-patent literature cited in the description

- **TRUONG ; VENKATESH.** Video abstraction: a systematic review and classification. *ACM Transactions on Multimedia Computing, Communications and Applications,* 2007, vol. 3 (1
- **SIVIC ; ZISSERMAN.** Video google: a text retrieval approach to object matching in videos. *IEEE International Conference on Computer Vision,* 2003
- **WORRING et al.** The MediaMill semantic video search engine. *IEEE International Conference on Acoustics, Speech and Signal Processing,* 2007
- **CHANG et al.** Columbia University's semantic video search engine. *ACM Conference on Image and Video Retrieval,* 2007
- **YANJUN QI et al.** Supervised classification for video shot segmentation. *Proc. of the 2003 Int. Conf. on Multimedia and Expo,* 06 July 2003, vol. 2, 689-692
- **QIAN et al.** Effective fades and flashlight detection based on accumulating histogram difference. *IEEE Transactions on Circuits and Systems for Video Technology,* 2006, vol. 16 (10
- **M.E SARGIN ; H. ARADHYE ; P.J. MORENO ; M. ZHAO.** Audiovisual celebrity recognition in unconstrained web videos. *International conference in acoustics speech and signal processing (ICASSP),* 2009, ISBN 978-1-4244-35 2353-8
- **C.J.C BURGES.** A Tutorial on Support Vector Machines for Pattern Recognition. *Data Mining and Knowledge discovery,* June 1998, vol. 2 (2), ISSN 1384-5810
- **T. COVER ; HART. P.** Nearest Neighbor Pattern Classification. *IEEE Transactions on Information Theory,* vol. 13 (1 25), ISSN 0018-9448, 21-27